Europäisches Patentamt

(19) European Patent Office

Office européen des brevets

(11) Publication number: **0 038 547**
**B1**

(12) **EUROPEAN PATENT SPECIFICATION**

(45) Date of publication of patent specification: **27.03.85**

(21) Application number: **81102974.3**

(22) Date of filing: **16.04.81**

(51) Int. Cl.⁴: **B 60 K 5/12,** F 16 F 15/08

(54) **Vibration absorber for an automotive vehicle.**

(30) Priority: **21.04.80 JP 52664/80**

(43) Date of publication of application:
**28.10.81 Bulletin 81/43**

(45) Publication of the grant of the patent:
**27.03.85 Bulletin 85/13**

(84) Designated Contracting States:
**DE FR GB**

(56) References cited:
**DE-A-2 240 157**
**FR-A-1 173 461**
**FR-A-1 302 704**
**FR-A-1 431 821**
**FR-A-2 029 015**
**FR-A-2 047 901**
**FR-A-2 262 231**
**FR-A-2 305 646**
**FR-A-2 378 986**
**GB-A- 904 856**
**GB-A-2 010 438**
**US-A-1 571 713**

(73) Proprietor: **NISSAN MOTOR COMPANY,
LIMITED**
**No.2, Takara-cho, Kanagawa-ku**
**Yokohama-shi Kanagawa-ken 221 (JP)**

(72) Inventor: **Kakimoto, Toshihiko**
**23-3-307, Kamiigusa 2-chome Suginami-ku**
**Tokyo (JP)**

(74) Representative: **Patentanwälte TER MEER -
MÜLLER - STEINMEISTER**
**Mauerkircherstrasse 45**
**D-8000 München 80 (DE)**

Courier Press, Leamington Spa, England.

EP 0 038 547 B1

# Description

The present invention relates to an improvement in the vibration absorber used for mounting a power unit (the engine and transmission together) in an automotive vehicle, and more specifically to the shapes of the rubber members used for the vibration absorber such that multi-step vibration absorbing characteristics are provided depending upon the shear and compression rates of deformation of the rubber member.

In order to absorb the vibration generated by the power unit of an automotive vehicle, there exist various vibration absorbers. In these prior-art vibration absorbers, usually two-step nonlinear vibration absorbing characteristics are required in order that the vibration is effectively damped by the shear deformation of the vibration absorbing rubber member when the vibration is relatively small and by the compression deformation thereof when the vibration is great. In this case however, since the vibration absorbing characteristics change abruptly, a sudden, unpleasant shock can be applied to the passengers.

Additionally, when the vehicle is gradually accelerated or decelerated, a certain amount of load is applied to the vibration absorber, and therefore small vibrations are transmitted to the vehicle body, since the rubber member is left deformed within the compression region beyond the shear region, thus resulting in a phenomenon called shuddering because the elasticity in the compression region is relatively great compared with that in the shear region.

The DE—A—2 240 157 discloses a vibration absorber which comprises a substantially V-shaped member and a wedge-shaped member having sidewalls substantially parallel to those of the V-shaped member. First rubber members are interposed between the opposing sidewalls of the wedge-shaped member and the V-shaped member, and a second rubber member is attached to the reduced lower end of the wedge-shaped member and projects towards the bottom of the V-shaped member. A third rubber member which has embeded therein a rigid plate is arranged in the space between the second rubber member and the bottom of the V-shaped member and extends between the inclined walls of the V-shaped member so as to bridge the bottom of the V-shaped member.

If the wedge-shaped member is displaced in the direction toward the V-shaped member, at first, the first rubber members are deformed under shear stress. Upon further displacement, the second rubber member abuts the third rubber member so that the latter is also deformed under shear stresses. As soon as the third rubber member abuts the bottom of the V-shaped member, the second and third rubber members are deformed under compression stress. Thus, the vibration absorber provides a multi-step vibration absorbing characteristics upon displacement in said one direction.

The present invention aims at providing a configuration of a multi-step characteristic vibration absorber which permits to further improve the vibration absorbing properties.

According to a first alternative of the invention, this problem is solved by providing a vibration absorber adapted to be disposed between the body and the power unit of an automotive vehicle, including a first member connected to the vehicle body, a second member connected to the power unit and a rubber member disposed between said first member and said second member so as to provide multistep elasticity characteristics (see DE—A—2240157) characterized in that (1) said first member is an outer cylinder; (2) said second member is a spool-shaped body having an inner cylinder with a pair of axially spaced plate members fixedly joined thereto, said inner cylinder having a diameter smaller than that of said outer cylinder and being disposed concentrically with said outer cylinder; and (3) said rubber member has (i) a tubular portion which is fixed to the interior of said outer cylinder, (ii) an arm portion which is fixed to said inner cylinder and which extends radially therefrom in opposite direction to said tubular portion, said arm portion having radially intermediate portions with axial dimensions greater than that of the remainder of the arm but less than the axial spacing between said plate members, said arm being further provided with a pair of radially outer portions having axial dimensions less than that of the remaining portions of the arm, and (iii) a pair of diametrically opposed projections each having an internal gap therewithin and extending inwardly from said tubular portion in a direction substantially perpendicular to the radial disposition of said arm with the inner ends of said projections being spaced from said arm, said rubber member being adapted to deform in a way such that when said spool-shaped body vibrates radially in directions transverse to that of said arm, said arm is deformed in a shear mode prior to contacting with said projections, and said projections are deformed first in a shear mode and next in a compression mode when brought into contact with said arm, and when said spool-shaped body vibrates in the axial direction, said arm is deformed in a shear mode prior to contacting with said plate members, and in a compression mode when said radially intermediate portions are brought into contact with said plate members, whereby multistep elasticity characteristics can be obtained in both the radial and axial vibration directions of said spool shaped body.

Thus, the vibration absorber according to this alternative of the invention provides a multistep vibration absorbing characteristics upon displacement in each of two oposite radial directions, due to the shear-deformation of the arm portion and of the shear-deformation and subsequent compression of the diametrically opposed projections.

Additionally, a multistep-absorbtion characteristics is provided upon axial displacement, due to the shear-deformation of the arm portion and subsequent abutment of the intermediate portions of the arm portion at said plate members.

According to a second alternative of the invention, the vibration absorber is characterized in that (1) said first member is an octagonal cylinder; (2) said second member is a flat arm having a free end surrounded by and spaced inwardly from the inner surfaces of said octagonal cylinder at the center thereof; and (3) said rubber member has (i) a pair of diametrically opposed truncated, pyramid-shaped first rubber members each having internal gaps, said first rubber members extending inwardly from said octagonal cylinder towards said arm and with the apexes of said first rubber members defining a clearance therebetween, said first rubber members being adapted, when brought into contact with said arm to deform in a shear mode before said gaps are closed and in a compression mode after said gaps are closed; and (ii) a pair of diametrically opposed pyramid-shaped second rubber members extending inwardly from said octagonal cylinder towards said arm in a direction substantially perpendicular to that of said first rubber members, the apexes of said second rubber members having a clearance therebetween greater than that existing between the apexes of the first rubber members, said second rubber members being adapted, when brought into contact with said arm to deform only in a compression mode, whereby multistep elasticity characteristics can be obtained in one radial direction.

According to this alternative, the opposed truncated first rubber members provide multistep damping characteristics upon displacement of the arm toward either of the first rubber members. In case of a lateral displacement of the arm with respect to said first rubber members, damping is achieved due to deformation of said second rubber members, independently of the deformation of the first rubber members.

According to a third alternative of the invention, the vibration absorber is characterized in that (1) said first member is a first U-shaped member; (2) said second member is a pair of second U-shaped members; and (3) said rubber member has (i) two symmetrical first projections having each an internal gap therewithin at its middle, one on either side surface thereof, and (ii) four symmetrical second projections, one on either side of each first projection, said second U-shaped members being implanted within said rubber member on either side thereof, a second U-shaped member being arranged between two of the second projections on either side of said rubber member, said rubber member being disposed within said first U-shaped member with an appropriate distance therebetween, said first projections being deformed first in a shear mode and next in a compression mode when the vibration is small and the second projections being deformed also in a compression mode when the vibration is greater, whereby multistep elasticity characteristics can be obtained in one direction.

In this case, the symmetrical arrangement of the first and second projections of the rubber member provides a multistep absorption characteristics upon displacement of said second U-shaped members to either side in said first direction.

The features and advantages of the vibration absorber according to the present invention will be more clearly appreciated from the following description taken in conjunction with the accompanying drawings in which like reference numerals designate corresponding elements and in which:

Fig. 1 is a diagram showing the characteristics of a vibration absorber with displacement in the Ø direction along the abscissa and with vibration load in the Ø direction along the ordinate;

Fig. 2(A) is a front view of a first embodiment of the present invention;

Fig. 2(B) is a cross-sectional view taken along the lines A—A' of Fig. 2A;

Fig. 3(A) is a front view of a second embodiment of the present invention;

Fig. 3(B) is a cross-sectional view taken along the line B—B' of Fig. 3(A);

Fig. 4(A) is a front view for illustrating a third embodiment of the present invention;

Fig. 4(B) is a cross-sectional view taken along the line C—C of Fig 4(A);

Fig. 5(A) is a side view for illustrating a fourth embodiment of the present invention;

Fig. 5(B) is a cross-sectional view taken along the line D—D' of Fig. 5(A);

Fig. 6 is a diagram showing the characteristics of the vibration absorber shown in Figs. 4 and 5 with displacement in the Ø direction along the abscissa and with vibration load in the Ø direction along the ordinate;

Fig. 7 is a view showing a modification of the rubber members shown in Fig. 4 and 5.

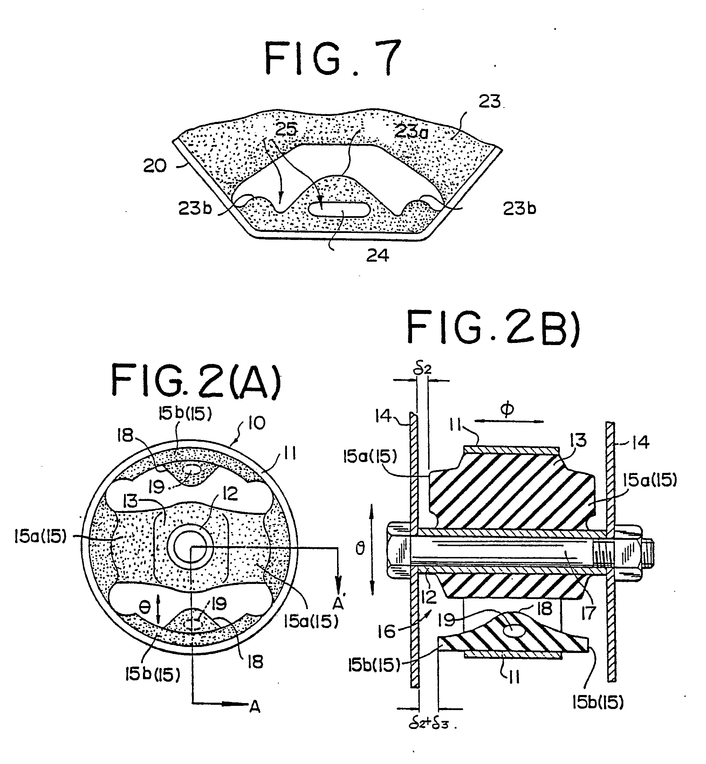

Figs. 2(a) and 2(b) show a first preferred embodiment where a first member is formed by an outer cylindrical body 11 and a second member is a spool-shaped body including an inner cylinder 12 and a pair of plate members 14 connected to the inner cylinder 12 by a shaft 17. A rubber member 13 is disposed between the outer cylindrical body 11 and the inner cylinder 12 with spaces between the sides of the rubber member 13 and the inner surfaces of the plate members 14. The rubber member 13 includes an arm member fixed to the inner cylinder 12 and a tubular member fixed to the outer cylinder body 11. In this rubber member 13, a pair of radially intermediate portions 15a of the arm member have an axial dimension greater than that of other portions of the arm member; the radially outer portions 15b of the tubular member have an axial dimension less than that of the radially intermediate portions 15a and greater than that of the other portions of the arm member. Further, a pair of projections 18 extending from the tubular member inwardly are arranged diametrically opposed in a direction substantially perpendicular to the arm member direction.

In this embodiment, the rubber member 13 forms an elasticity change portion 16 on side projections 15a of the rubber member 13 placed between the outer and inner cylinders 11 and 12 and on other side projections 15b provided on the outer cylinder 11. The clearance between the rubber member 15a and the second member 14 is preset to $\delta_2$, and the clearance between the rubber member 15b and the second member 14 is preset to $\delta_2+\delta_3$ for deformation in the axial direction of the shaft 17.

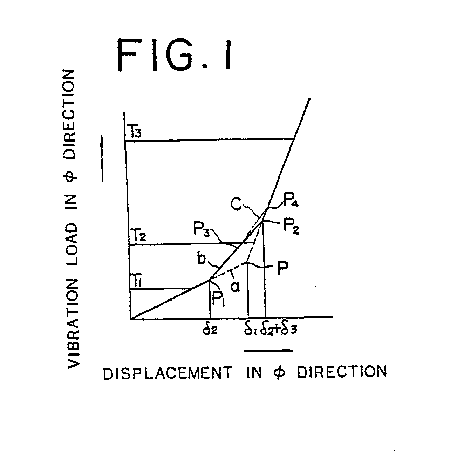

When this vibration absorber 13 is used to mount a power unit by connecting the first member 11 to the power unit (not shown) and the second member 14 to the vehicle body (not shown), it is possible to obtain two-step elasticity characteristics. That is to say first the rubber member 13 deforms under shear due to vibration in the Ø direction because the outer cylinder 11 of the first member deforms toward the second member 14, next the rubber member 13 is brought into contact with the side of the second member 14 to produce a damping effect. In this case, first the larger projection 15a of the rubber member 13 is brought into contact with the side of the second member 14 and deforms under shear along a gentle gradient corresponding to $P_1$ to $P_2$ in Fig. 1; next the smaller projection 15b of the rubber member 13 is brought into contact with the side of the second member 14 and deforms under shear along a sharp gradient corresponding to $P_2$ and after in Fig. 1.

Additionally in this embodiment, since another pair of rubber members 18 are provided inside the outer cylinder 11 in order to supply a damping function against vibration in the θ direction, it is also possible to provide two-step elasticity characteristics in the θ direction by making a cavity 19 in the rubber member 18 so that the rubber member 18 deforms under both shear and compression.

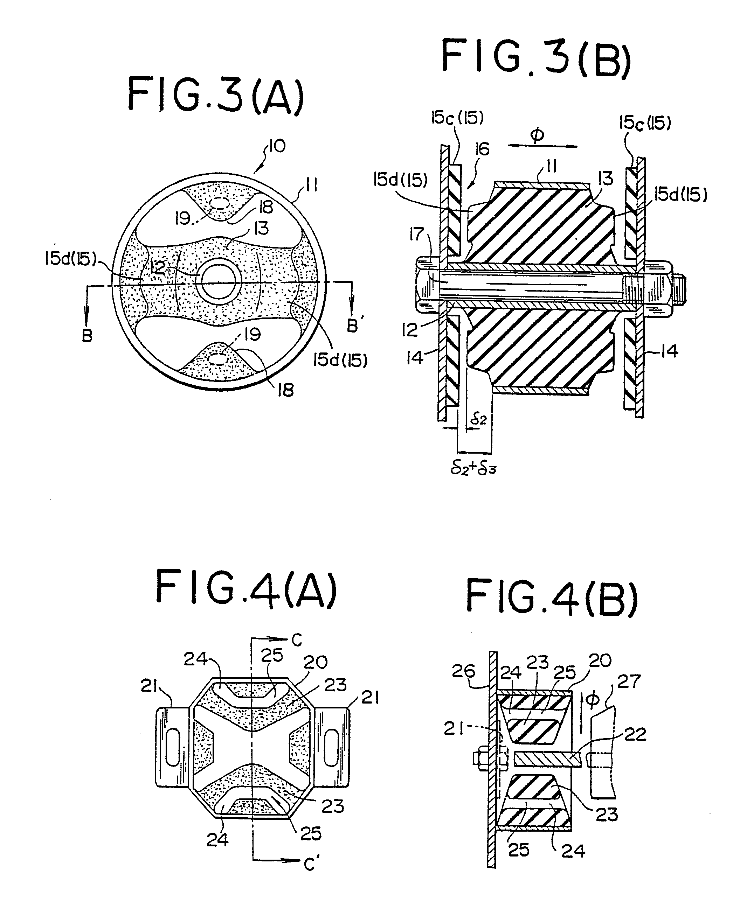

Figs 3(A) and 3(B) show a second embodiment in which the rubber member 13 providing a damping function includes a pair of flat rubber members 15c disposed on the inner surfaces of a pair of second members 14 against the sides of an outer cylinder 11, and a rubber member 15d projecting from the sides of a rubber member 13 placed between an inner cylinder 12 and the outer cylinder 11. The clearance between the rubber member 15c and the rubber member 15d is preset to $\delta_2$; the clearance between the rubber member 15c and the outer cylinder 11 is preset to $\delta_2+\delta_3$.

In this embodiment, the relative displacement of the outer cylinder 11 of a first member from the second member 14 caused by vibration in the Ø direction produces a damping function when the rubber member 15d is brought into contact with the rubber member 15c attached to the second member 14, after the rubber member 13 disposed between the outer cylinder 11 and the inner cylinder 12 has been deformed under shear. That is to say, it is possible to obtain two-step elasticity characteristics such that first the rubber member 15d deforms under shear along a gentle gradiant corresponding to $P_1$ to $P_2$ in Fig. 1; next the rubber member 15d is brought into contact with the rubber member 15c and deforms under compression along a sharp gradient corresponding to $P_2$ and after in Fig. 1.

Figs. 4(A) and 4(B) show a third embodiment used for absorbing the vertical vibration of a power unit.

In the embodiment of Fig. 4, a first member 20 is an octagonal cylinder fixed to the vehicle body 26 by a pair of brackets 21 provided on opposite sides thereof. A second member 22 is a flat-shaped arm fixed to the power unit by another bracket 27 with the free end of the second member 22 being suspended at the center of the first member 20. A pair of rubber members 23 to absorb vibration in the Ø direction are provided on either the first member 20 or the second member 22 (on the inner wall of the first member 20 in this embodiment) facing the second member 22 and having an elasticity change portion 25 including a gap 24 within the rubber member 23. The rubber members 23 are large, truncated and pyramid-shaped and each have a gap or slot 24 within them. The rubber members are arranged diametrically opposed in a first radial direction of the octagonal cylinder. A pair of small tuncated, pyramid-shaped rubber members are arranged diametrically opposed in a second radial direction of the octagonal cylinder substantially perpendicular to the first radial direction with a greater clearance between the apexes of the small pyramid-shaped rubber members than between the apexes of the large rubber members 23.

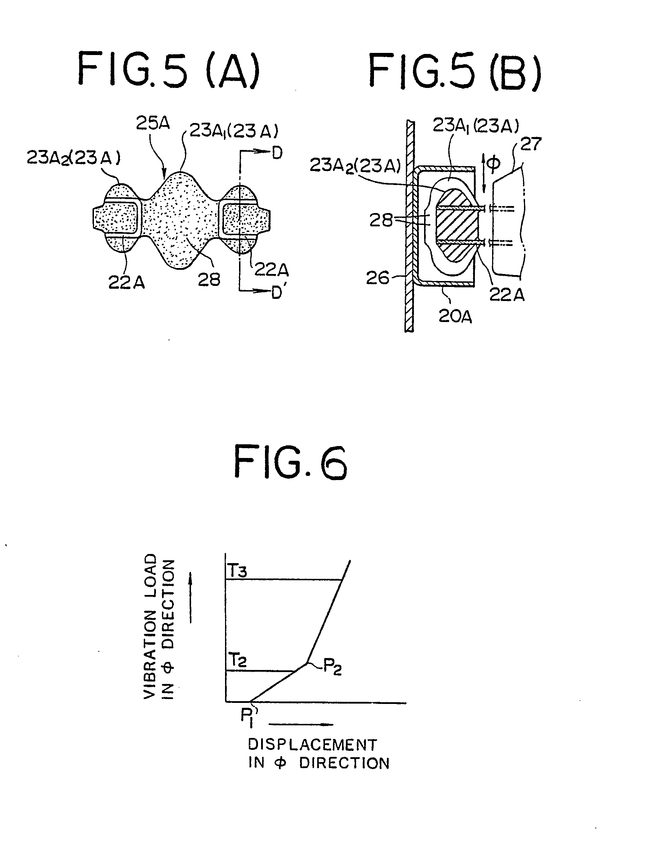

Accordingly, in this embodiment, when vibration in the Ø direction is applied by the power unit through the bracket 27, that is vibration is applied to the rubber member 23 through the second member 22, the rubber member 23 deforms under shear, until the gap 24 is closed, along a gentle gradient corresponding to $P_1$ to $P_2$ in Fig. 6, and next deforms under compression, along a sharp gradient corresponding to $P_2$ and after in Fig. 6, thus providing two-step elasticity characteristics to prevent either shock or the shuddering phenomenon.

Further, in this embodiment, when the rubber member 23 is constructed in such a way that a plurality of projections with different projection rates are provided therein and another gap 24 is provided in the largest projection 23a as depicted in Fig. 7 since the compression differs between the rubber members 23a and 23b after the gap 24 has closed, it is possible to provide three-step nonlinear elasticity characteristics.

Figs. 5(A) and 5(B) show a seventh embodiment. In this embodiment, a pair of U-shaped second members 22A are placed within a first member 20A with their backs facing each other separated by an appropriate distance, and are connected by a rubber member 28 having two symmetrical large rubber projections $23A_1$ at the middle thereof and four symmetrical small rubber projections $23A_2$ near the pair of U-shaped members 22A, so that the rubber members 23A are provided with the elasticity change portion 25A due to shear.

Accordingly, in this embodiment, when vibration in the Ø direction is generated between the first member 20A and the second member 22A, first the rubber member $23A_1$ is brought into contact with the first member 20A and the rubber member 28 deforms under shear, in addition to the local compression of the rubber member $23A_1$, along a gentle gradient corresponding to $P_1$ to $P_2$ in Fig. 6, and next the pair of rubber members $23A_2$ additionally deforms under compression when greater vibration is generated, along a sharp gradient corresponding to $P_2$ and after in Fig. 6, thus providing two-step elasticity characteristics. Further in figures 5(A) and 5(B), the reference numeral 23A corresponds to 23a shown in figure 7, indicating that when the first rubber member $23A_1$ is formed with an internal gap 24 as depicted in figure 7, since the compression differs between the rubber members $23A_1$ and $23A_2$ after the gap has closed, it is possible to provide three-step nonlinear elasticity characteristics.

As described hereinabove, in the vibration absorber for mounting a power unit according to the present invention, since multistep elasticity characteristics are provided in dependence upon the shear and compression of the rubber member even while a medium frequency vibration is applied to the absorber, it is possible to realize the practical effect such that the vibration is appropriately and effectively damped, without producing shuddering, even while the vehicle is gradually accelerated or decelerated.

## Claims

1. A vibration absorber adapted to be disposed between the body and the power unit of an automotive vehicle, including:

— a first member (11) connected to the vehicle body;
— a second member (17) connected to the power unit; and
— a rubber member (13) disposed between said first member and said second member so as to provide multistep elasticity characteristics, characterized in that

(1) said first member is an outer cylinder (11);
(2) said second member is a spool-shaped body having an inner cylinder (17) with a pair of axially spaced plate members (14) fixedly joined thereto, said inner cylinder having a diameter smaller than that of said outer cylinder and being disposed concentrically with said outer cylinder; and
(3) said rubber member (13) has (i) a tubular portion which is fixed to the interior of said outer cylinder, (ii) an arm portion which is fixed to said inner cylinder and which extends radially therefrom in opposite directions to said tubular portion, said arm portion having radially intermediate portions (15a) with axial dimensions greater than that of the remainder of the arm but less than the axial spacing between said plate members, said arm being further provided with a pair of radially outer portions having an axial dimensions less than that of the remaining portions of the arm; and (iii) a pair of diametrically opposed projections (18) each having an internal gap (19) therewithin and extending inwardly from the tubular portion in a direction substantially perpendicular to the radial disposition of said arm with the inner ends of said projections being spaced from said arm, said rubber member being adapted to deform in a way such that when said spool-shaped body vibrates radially in directions transverse to that of said arm, said arm is deformed in a shear mode prior to contacting with said projections, and said projections are deformed first in a shear mode and next in a compression mode when brought into contact with said arm, and when said spool-shaped body vibrates in the axial direction, said arm is deformed in a shear mode prior to contacting with said plate members, and in a compression mode when said radially intermediate portions are brought into contact with said plate members;

whereby multistep elasticity characteristics can be obtained in both the radial and axial vibration directions of said spool-shaped body.

2. A vibration absorber for an automotive vehicle as set forth in claim 1, further comprising a pair of flat rubber members (15c) fixed to said plate members (14) in a way such that the radially intermediate portions of the arm member can be brought into contact with said rubber members when there is sufficient vibration in the axial direction of said spool-shaped body.

3. A vibration absorber adapted to be disposed between the body and the power unit of an automotive vehicle, including:

— a first member (20) connected to the vehicle body;
— a second member (22) connected to the power unit; and
— a rubber member (23) disposed between said first member and said second member so as to provide multistep elasticity characteristics, characterized in that

(1) said first member is an octagonal cylinder (20);
(2) said second member is a flat arm (22) having a free end surrounded by and spaced inwardly from the inner surfaces of said octagonal cylinder at the center thereof; and
(3) said rubber member has (i) a pair of diametrically opposed truncated, pyramid-shaped first rubber members (23) each having internal gaps (25), said first rubber members extending inwardly from said octagonal cylinder towards said arm and with the apexes of said first rubber members defining a clearance therebetween, said first rubber members being adapted, when brought into contact with said arm, to deform in a shear mode before said gaps are closed and in a compression mode after said gaps are closed; and (ii) a pair of diametrically opposed pyramid-shaped second rubber members exteding inwardly from said octagonal cylinder towards said arm in a direction substantially perpendicular to that of said first rubber members, the apexes of said second rubber members having a clearance therebetween greater than that existing between the apexes of first rubber members, said second rubber members being adapted, when brought into contact with said arm, to deform only in a compression mode,

whereby multistep elasticity characteristics can be obtained in one radial direction.

4. A vibration absorber adapted to be disposed between the body and the power unit of an automotive vehicle, including:

— a first member (20A) connected to the vehicle body;
— a second member (22A) connected to the power unit; and
— a rubber member (23A$_1$, 23A$_2$) disposed between said first member and said second member so as to provide multistep elasticity characteristics, characterized in that

(1) said first member is a first U-shaped member (20A);

(2) said second member is a pair of second U-shaped members (22A); and

(3) said rubber member has (i) two symmetrical first projections (23A$_1$) having each internal gap therewithin at its middle, one on either side surface thereof, and (ii) four symmetrical second projections (23A$_2$), one on either side of each first projection, said second U-shaped members being implanted within said rubber member on either side thereof, a second U-shaped member being arranged between two of the second projections on either side of said rubber member, said rubber member being disposed within said first U-shaped member with an appropriate distance therebetween, said first projections being deformed first in a shear mode and next in a compression mode when the vibration is small and the second projections being deformed also in a compression mode when the vibration is greater;

whereby multistep elasticity characteristics can be obtained in one direction.

**Revendications**

1. Amortisseur des vibrations adapté à être disposé entre la carrosserie et l'unité motrice d'un véhicule automobile, comprenant:

— un premier organe (11) connecté à la carrosserie due véhicule;

— un second organe (17) connecté à l'unité motrice; et
— un organe en caoutchouc (13) disposé entre ledit premier organe et ledit second organe afin de produire des caractériques d'élasticité à plusieurs étapes, caractérisé en ce que

(1) ledit premier organe est un cylindre externe (11);

(2) ledit second organe est un corps en forme de bobine ayant un cylindre interne (17) avec deux organes formant plaques axialement espacés (14) qui y sont joints solidement, ledit cylindre interne ayant un diamètre plus petit que celui dudit cylindre externe et étant disposé concentriquement audit cylindre externe; et

(3) ledit organe en caoutchouc (13) a (i) une partie tubulaire que est fixée à l'intérieur dudit cylindre externe, (ii) une partie de bras qui est fixée audit cylindre interne et qui s'en étend radialement en directions opposées à ladite partie tubulaire, ladite partie de bras ayant des parties radialement intermédiaires (15a) dont les dimensions axiales sont plus importantes que celles du restant du bras mais plus faibles que l'espace axial entre lesdits organes formant plaques, ledit bras étant de plus pourvu de deux parties radialement externes ayant des dimensions axiales plus faibles que celles des parties restantes dudit bras; et (iii) une paire de protubérances diamétralement opposées (18) chacune ayant un espace interne (19) et s'étendant vers l'intérieur de la partie tubulaire dans une direction sensiblement perpendiculaire à la disposition radiale dudit bras avec les extrémités internes desdites protubérances espacées dudit bras, ledit organe en caoutchouc étant adapté à se déformer d'une façon telle que lorsque ledit corps en forme de bobine vibre radialement dans des directions transversales à celles dudit bras, ledit bras soit déformé en mode de cisaillement avant de contacter lesdites protubérances, et lesdites protubérances soient déformées d'abord en mode de cisaillement et ensuite en mode de compression lorsqu'elles sont amenées en contact avec ledit bras, et quand ledit corps en forme de bobine vibre en direction axiale, ledit bras soit déformé en mode de cisaillement avant de contacter lesdits organes formant plaques, et en mode de compression lorsque lesdites parties radialement intermédiaires sont amenées en contact avec lesdits organes formant plaques;

ainsi des caractéristiques d'élasticité à plusieurs étapes peuvent être obtenues en directions des vibrations radiales et axiales dudit corps en forme de bobine.

2. Amortisseur des vibrations pour un véhicule automobile selon la revendication 1, comprenant de plus deux organes plats en caoutchouc (15c) qui sont fixés auxdits organes formant plaques (14) de façon que les parties radialement intermédiaires dudit organe formant bras puissent être amenées en contact avec lesdits organes en caoutchouc lorsqu'il y a des vibrations suffisantes en direction axiale dudit corps en forme de bobine.

3. Amortisseur de vibrations adapté à être disposé entre la carrosserie et l'unité motrice d'un vehicule automobile, comprenant:

— un premier organe (20) connecté à la carrosserie du véhicule;
— un second organe (22) connecté à l'unité motrice; et
— un organe en caoutchouc (23) disposé entre ledit premier organe et ledit second organe afin de produire des caractéristiques d'élasticité à plusieurs étapes, caractérisé en ce que

(1) ledit premier organe est un cylindre octogonal (20);
(2) ledit second organe est un bras plat (22) ayant une extrémité libre entourée par et espacée vers l'intérieur des surfaces internes dudit cylindre octogonal en son centre;
(3) ledit troisième organe en caoutchouc (i) a une paire de premiers organes en caoutchouc diamétalement opposés et en forme de pyramide tronquée (23), chacun ayant des espaces internes (25), lesdits premiers organes en caoutchouc s'étendant vers l'intérieur dudit cylindre octogonal vers ledit bras et avec les sommets desdits premiers organes en caoutchouc définissant un jeu entre eux, lesdits premiers organes en caoutchouc étant adaptés, lorsqu'ils sont amenès en contact avec ledit bras, à se déformer en mode de cisaillement avant que lesdits espaces ne soient fermés et en mode de compression après fermeture desdits espaces; et (ii) une paire de seconds organes en caoutchouc diamétalement opposés et en forme de pyramide, s'étandant vers l'intérieur dudit cylindre octogonal ves ledit bras dans une direction sensiblement perpendiculaire à celle desdits premiers organes en caoutchouc, les sommets desdits seconds organes en caoutchouc ayant un jeu entre eux plus important que celui existant entre les sommets desdits premiers organes en caoutchouc, lesdits seconds organes en caoutchouc étant adaptés, lorsqu'ils sont amenés en contact avec ledit bras, à ne se déformer qu'en mode de compression, ainsi des caractéristiques d'élasticité à plusieurs étapes peuvent être obtenues dans une direction radiale.

4. Amortisseur des vibrations adapté à être disposé entre la carrosserie et l'unité motrice d'une véhicule automobile, comprenant:

— un premier organe (20A) connecté à la carrosserie du véhicule;
— un second organe (22A) connecté à l'unité motrice; et
— un organe en caoutchouc (23A$_1$, 23A$_2$) disposé entre ledit premier organe et ledit second organe afin de produire des caractéristiques d'élasticité à plusieurs étapes, caractérisé en ce que

(1) ledit premier organe est un premier organe en forme de U (20A);
(2) ledit second organe est formé d'une paire de seconds organes en forme de U (22A); et
(3) ledit organe en caoutchouc a (i) deux premières protubérances symétriques (23A$_1$) ayant chacune un espace interne en con milieu, une sur chacune de ses surfaces latérales, et (ii) quatre secondes protubérances symétriques (23A$_2$), une sur chaque côté de chaque première protubérance, lesdits seconds organes en forme de U étant implantés dans ledit organe en caoutchouc sur chaque côte de celui-ci, un second organe en forme de U étant agencé entre deux des secondes protubérances de chaque côté dudit organe en caoutchouc, ledit organe en caoutchouc étant disposé dans ledit premier organe en forme de U avec une distance appropriée entre eux, lesdites premières protubérances étant déformées d'abord en mode de cisaillement et ensuite en mode de compression lorsque les vibrations sont faibles et les secondes protubérances étant déformées également en mode de compression lorsque les vibrations sont plus importantes; ainsi on peut obtenir des caractéristiques d'élasticité à plusieurs étapes dans une direction.

**Patentansprüche**

1. Schwingungsdämpfer zur Anordnung zwischen der Karosserie und der Antriebseinheit eines Kraftfahrzeugs, mit

— einem ersten Teil (11), das mit der Fahrzeugkarosserie verbunden ist;
— einem zweiten Teil (17), das mit der Antriebseinheit verbunden ist; und
— einem Gummiteil (13) zwischen dem ersten und dem zweiten Teil, das eine mehrstufige Elastizitäts-Charakteristik aufweist, dadurch gekennzeichnet, daß

(1) das erste Teil ein äußerer Zylinder (11) ist;
(2) das zweite Teil ein spulenförmiger Körper mit einem inneren Zylinder (17) mit zwei in axialem Abstand liegenden, fest mit diesem verbundenen Plattenteilen (14) ist, welcher Zylinder einen Durchmesser aufweist, der geringer als der Durchmesser des äußeren Zylinders ist und konzentrisch innerhalb des äußeren Zylinders liegt; und
(3) das Gummiteil (13) (i) einen schlauchförmigen Bereich, der im Inneren des äußeren Zylinders befestigt ist, (ii) einen Armbereich, der an dem inneren Zylinder befestigt ist und sich radial von diesem in entgegengesetzte Richtungen zu dem Schlauchförmigen Bereich erstreckt, welcher Armbereich radiale Zwischenbereich (15a) aufweist, deren axiale Abmessungen größer als diejenigen des Rests des Arms, jedoch geringer als der axiale Abstand zwischen den Plattenteilen ist, welcher Arm weiterhin mit zwei radial äußeren Bereichen versehen ist, deren axiale Abmessungen geringer als diejenigen des Rests des Armes sind; und (ii) zwei diametral gegenüberliegende Vorsprünge (18) umfaßt, die jeweils einen inneren Hohlraum (19) im Inneren aufweisen und sich nach innen von dem rohrförmigen Bereich in Richtung im wesentlichen senkrecht zu der radialen Anordnung des Armes erstrecken und mit ihren inneren Enden in Abstand von dem Arm liegen, welches Gummiteil derart verformbar ist, daß bei radialer Schwingung des spulenförmigen Körpers in einer Richtung quer zu derjenigen des Armes dieser Arm in Scherrichtung verformt wird, bevor er die Vorsprünge berührt, und die Vorsprünge zunächst in Scherrichtung und anschließend in Kompressionsrichtung verformt werden, wenn sie in Berührung mit dem Armbereich gelangen, und bei einer Schwingungsbewegung des spulenförmigen Körpers in Axialrichtung der Arm in Scherrichtung vor der Berührung der Plattenteile verformt wird, und in Kompressionsrichtung, wenn die radialen Zwischenbereich in Berührung mit den Plattenteilen gelangen, so daß eine mehrstufige Elastizitäts-Charateristik in beiden radialen und axialen Schwingungsrichtungen des spulenförmigen Körpers erzielt wird.

2. Schwingungsdämpfer für ein Kraftfahrzeug nach Anspruch 1, gekennzeichnet durch zwei flache Gummiteile (15c) die an den Plattenteilen (14) derart befestigt sind, daß die radialen Zwischenbereiche der Armbereiche in Berührung mit den Gummiteilen gebracht werden können, wenn eine aurreichende Schwingung in Axialrichtung des spulenförmigen Körpers vorliegt.

3. Schwingungsdämpfer zur Anordnung zwischen der Karosserie und der Antriebseinheit eines Kraftfahrzeugs, mit

— einen ersten Teil (20), das mit der Fahrzeugkarosserie verbunden ist;
— einem zweiten Teil (22), das mit der Antriebseinheit verbunden ist; und
— einem dritten Teil (23), das zwischen dem ersten und den zweiten Teil derart angeordnet ist, daß eine mehrstufige Elastizitäts-Charakteristik entsteht, dadurch gekennzeichnet, daß

(1) das erste Teil ein oktagonaler Zylinder (20) ist;

(2) das zweite Teil ein flacher Arm (22) mit einem freien Ende ist, das umgeben ist durch und nach innen in Abstand liegt zu den inneren Flächen des oktagonalen Zylinders und sich in dessen Mittelpunkt befindet; und

(3) daß das Gummiteil (1) zwei diametral gegenüberliegende, pyamidenstumpfförmige, erste Gummiteile (23) mit inneren Hohlräumen (25), die sich nach innen von dem oktagonalen Zylinder in Richtung des Armes erstrecken und mit ihren Kuppen in Abstand zu diesem liegen sowie derart ausgebildet sind, daß sie bei Berührung mit dem Arm in Scherrichtung verformt werden, bevor die Hohlräume geschlossen sind, und anschließend eine Druckverformung erfahren; und (ii) zwei diametral gegenüberliegende, pyramidenstumpfförmige, zweite Gummiteile umfaßt, die sich nach innen von dem oktagonalen Zylinder in Richtung des Armes im wesentlichen senkrecht zu den inneren Gummiteilen erstrecken und mit ihren inneren Kuppen einen Abstand zu dem Arm aufweisen, der größer als der entsprechende Abstand der Kuppen der ersten Gummiteile ist welche zweiten Gummiteile bei Berührung mit dem Arm nur eine Kompressionsverfahrung erfahren, so daß eine mehrstufige Elastizitäts-Charateristik in einer radialen Richtung erzielt wird.

4. Schwingungsdämpfer zur Anordnung zwischen der Karosserie und der Antriebseinheit eines Kraftfahrzeugs, mit

— einem ersten Teil (20A), das mit der Fahrzeugkarosserie verbunden ist;
— einem zweiten Teil (22A), das mit der Antriebseinheit verbunden ist; und
— einem Gummiteil (23A$_1$, 23A$_2$), das derart zwischen dem ersten und zweiten Teil angeordnet ist, daß eine mehrstufige Elastizitäts-Charakteristik entsteht, dadurch gekennzeichnet, daß

(1) das erste Teil ein erstes U-förmiges Teil (20A) ist;

(2) das zweite Teil aus zwei zweiten U-förmigen Teilen (22A) besteht; und

(3) das Guumiteil (i) zwei symmetrische erste Vorsprünge (23A$_1$) mit einem inneren Hohlraum in ihrer Mitte, jeweils auf einer Seitenoberfläche der Vorsprünge, und (ii) vier symmetrische zweite Vorsprünge (23A$_2$) jeweils auf beiden Seiten jedes ersten Vorsprunges umfaßt, welche zweiten U-förmigen Teile in das Gummiteil auf dessen beiden Seiten eingefügt sind wobei ein zweites U-förmiges Teil zwischen zwei der zweiten Vorsprünge auf beiden Seiten des Gummiteils angeordnet ist, welches Gummiteil innerhalb des ersten U-formigen Teil mit geeignetem Abstand zu diesem angeordnet ist, welche erste Vorsprünge zunächst einer Scherverformung und sodann einer Kompressionsverformung unterworfen werden, wenn die Schwingung gering ist, und die zweiten Vorsprünge ebenfalls einer Kompressionsverformung unterworfen werden, wenn die Schwingung größer ist;

so daß eine mehrstufige Elastizitäts-Charateristik in einer Richtung erzielt wird.

# FIG. I

VIBRATION LOAD IN φ DIRECTION

DISPLACEMENT IN φ DIRECTION

# FIG. 7

# FIG. 2(A)

# FIG. 2B)

# FIG.3(A)

# FIG.3(B)

# FIG.4(A)

# FIG.4(B)

# FIG. 5 (A)

# FIG. 5 (B)

# FIG. 6